# EUROPÄISCHE PATENTSCHRIFT

(11) **EP 0 455 973 B1**
(45) Veröffentlichungstag und Bekanntmachung des Hinweises auf die Patenterteilung: **17.05.1995**
(21) Anmeldenummer: 91104519.3
(22) Anmeldetag: 22.03.1991
(51) Int. Cl.: B66B 13/30, F16B 5/02

(54) **Führungsleiste für Aufzugstür**
Guide rail for elevator door
Rail de guidage pour porte d'ascenseur

(30) Priorität: 07.05.1990 US 520237
(43) Veröffentlichungstag der Anmeldung: 13.11.1991
(73) Patentinhaber: INVENTIO AG, CH-6052 Hergiswil NW (CH)
(72) Erfinder: Martin, Adolf H., Glenview, Illinois 60025 (US)

(56) Entgegenhaltungen:
- US-A- 3 195 171
- US-A- 3 523 390
- US-A- 4 106 876

## Beschreibung

Die Erfindung betrifft eine Führungsleiste für eine Aufzugstür bestehend aus einem Träger mit einem ersten Schenkel und einem zweiten Schenkel sowie aus einer am ersten Schenkel befestigbaren Gleitführung, wobei am ersten Schenkel mehrere versetzt angeordnete Öffnungen zur Schaffung von Verstellmöglichkeiten für die Gleitführung vorgesehen sind.

Aus der Patentschrift US-A-3 195 171 ist eine Aufzugstür mit einer am unteren Türende angeordneten Führungsleiste bekannt geworden. Die Führungsleiste besteht aus einem Träger mit einem ersten Schenkel und einem zweiten Schenkel, an dem ein Führungskörper befestigbar ist, der die Aufzugstür entlang eines U-förmigen Profils führt. Am zweiten Schenkel sind ein erstes Feld mit Bohrungen und ein zweites Feld mit Bohrungen vorgesehen. Der Führungskörper wird mittels zweier Schrauben am zweiten Schenkel befestigt, wobei die eine Schraube eine Bohrung des ersten Feldes und die andere Schraube eine Bohrung des zweiten Feldes durchdringt. Die Bohrungen sind derart über den zweiten Schenkel verteilt, dass der Führungskörper in der Längsrichtung wie auch in der Querrichtung des zweiten Schenkels unterschiedliche Positionen einnehmen kann. In einer weiteren Ausführungsvariante sind anstelle der Bohrungen Langschlitze vorgesehen, die in der Längsrichtung und in Querrichtung des zweiten Schenkels liegen.

Aus der Patentschrift US-A-3 523 390 ist eine Schiebetür für einen Aufzug bekannt geworden, die am unteren Türende mittels einer türmittig angeordneten Rollenführung entlang einer vorherbestimmten Verschiebebahn geführt wird. Ein innerer Schaft der Rollenführung ist fest mit einem am unteren Türende angeordneten Träger verbunden. Eine am inneren Schaft rollengelagerte Laufrolle taucht in eine in der Türschwelle eingelassene Nut ein, welche die Verschiebebahn bestimmt. Der am unteren Türende angeordnete Träger weist rechteckförmige längs und quer zum Träger angeordnete Öffnungen auf, die zur Aufnahme des Schaftendes und der Schaftbefestigungsmittel vorgesehen sind. Die im Träger angeordneten Öffnungen ermöglichen bei der Montage allfällige Abweichungen zwischen der Tür und der Schwellennut auszugleichen, indem die Rollenführung in eine geeignete der gegeneinander versetzt angeordneten Öffnungen eingesetzt wird.

Diese bekannten Aufzugstüren genügen den heutigen Anforderungen hinsichtlich der Möglichkeiten zum Ausgleich von baulichen Abweichungen zwischen Tür und Schwelle nicht mehr.

Hier will die Erfindung Abhilfe schaffen. Die Erfindung, wie sie in den Ansprüchen gekennzeichnet ist, löst die Aufgabe, eine Schiebetür zu schaffen, bei der während und nach der Montage die Ausgleichsmöglichkeiten von baulichen Abweichungen verbessert werden.

Die durch die Erfindung erreichten Vorteile sind im wesentlichen darin zu sehen, dass präzise ausgerichtete Schiebetüren zum Öffnen und Schliessen kleinere Verschiebekräfte erfordern, was insbesondere bei der Dimensionierung von motorischen Türantrieben hinsichtlich der Motorengrösse ausschlaggebend ist. Ein weiterer Vorteil ist darin zu sehen, dass die im Laufe der Zeit auftretenden Gebäudeveränderungen mittels dem mit der Erfindung geschaffenen Feinausgleich der Schiebetür vom Unterhaltsdienst ausgeglichen werden können.

Im folgenden wird die Erfindung anhand von lediglich einen Ausführungsweg darstellenden Zeichnungen näher erläutert. Es zeigen:
- Fig. 1: Eine räumliche Darstellung der erfindungsgemässen Führungsleiste,
- Fig. 2: eine Ausführungsvariante einer Öffnung zur Aufnahme der Befestigungsmittel für die Führungsmittel,
- Fig. 3 und 4: Aufnahmevarianten der Befestigungsmittel und
- Fig. 5: eine Anordnung der Öffnungen an einem Träger der Führungsleiste zur gestuften Vervielfachung der Verstellmöglichkeiten.

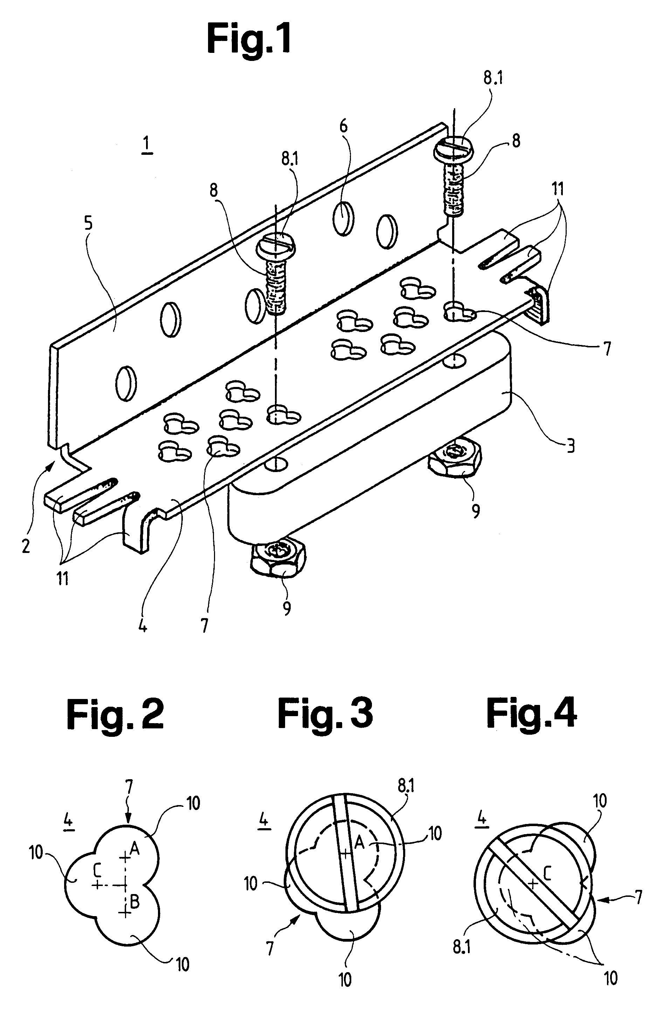

In den Fig. 1 bis 5 ist mit 1 eine Führungsleiste bezeichnet, die einen rechteckförmigen Träger 2 und am Träger 2 befestigte Führungsmittel in der Form einer Gleitführung 3 aufweist. Der aus einem handelsüblichen kaltgewalzten Qualitätsstahl gefertigte Träger 2 besteht aus einem ersten Schenkel 4 und aus einem zweiten Schenkel 5 in rechtwinkliger Anordnung. Die Oberfläche ist mittels einer Kadmiumschicht gegen Korrosion geschützt. Zur Befestigung des Trägers 2 an der Aufzugstür sind an dem zweiten Schenkel 5 Bohrungen 6 vorgesehen. Am ersten Schenkel 4 angeordnete Öffnungen 7 nehmen die die Gleitführung 3 mit dem ersten Schenkel 4 verbindenden Befestigungsmittel in der Form von Schrauben 8 und Muttern 9 auf. Die aus einem dauerhaften Nylon in Form hergestellte Gleitführung 3 taucht in eine nicht dargestellte in die Türschwelle eingelassene Nut ein, wodurch die Aufzugstür auf einer vorherbestimmten Verschiebebahn geführt wird. In einer weiteren Ausführungsvariante sind an Stelle der Gleitführung 3 Rollenführungsmittel vorgesehen.

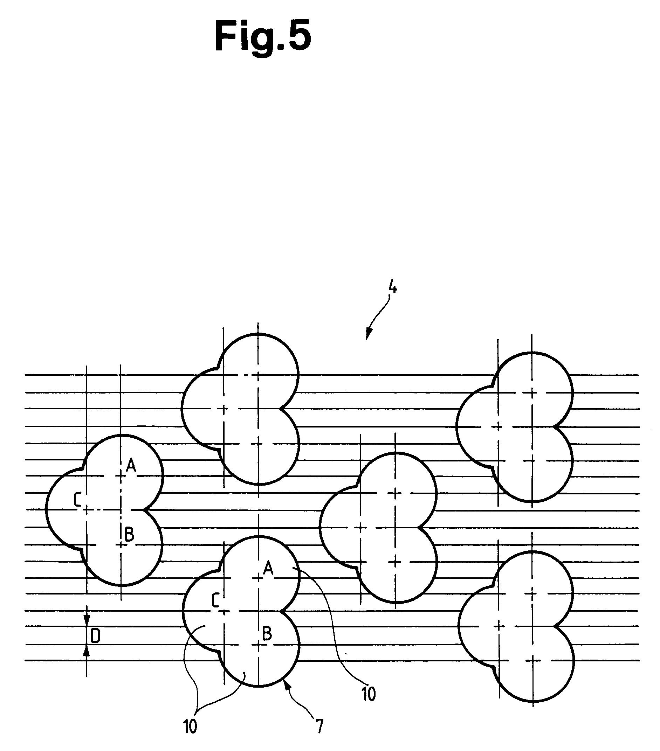

Im vorliegenden Ausführungsbeispiel sind am ersten Schenkel 4 sechs Öffnungen 7 für den Ausgleich der baulichen Abweichungen vorgesehen. Jede Öffnung 7 weist drei kreisrunde Ausnehmungen 10 auf. Die Befestigungsmittel werden je nach der notwendigen Korrektur der Abweichung in die entsprechende Öffnung 7 und Ausnehmung 10 eingesetzt. Die Mittelpunkte A;B;C der kreisrunden Ausnehmungen 10 bilden ein gleichschenkliges Dreieck ABC, wobei der lotrechte Abstand von C zur Strecke AB halb so gross ist wie die Strecke AB. Damit wird gewährleistet, dass der Schraubenkopf 8.1 an mindestens zwei Dritteln seines Umfanges vom ersten Schenkel 4 gestützt wird. Mit D ist die beim Ausgleich der Abweichungen kleinstmögliche Schrittweite in Querrichtung des ersten Schenkels 4 bezeichnet. Die Schrittweite D entspricht einem Viertel der Strecke AB, wobei die Öffnungen 7 gemäss Fig. 5 derart angeordnet sind, dass die Mittelpunkte A;B;C der Ausnehmungen 10 in Querrichtung jeweils um die Schrittweite D alternierend verschoben sind, womit gegenüber herkömmlichen Ausgleichsmöglichkeiten eine Verdreifachung der möglichen Befestigungspunkte erreicht wird.

An den Schmalseiten des ersten Schenkels 4 sind Zähne 11 vorgesehen. Je Schmalseite wird abhängig von der gewählten Lage des Führungsmittels ein Zahn 11 bestimmt und gemäss Fig. 1 zum Führungsmittel hin so abgewinkelt, dass dieser die Führungsnut nicht berührt. Sinn und Zweck der Zähne ist, dass bei beispielsweise durch Feuer zerstörter Gleitführung 3 die Aufzugstür verriegelt gehalten werden kann.

## Patentansprüche

1. Führungsleiste (1) für eine Aufzugstür bestehend aus einem Träger (2) mit einem ersten Schenkel (4) und einem zweiten Schenkel (5) sowie aus einer am ersten Schenkel (4) befestigbaren Führung (3), wobei am ersten Schenkel (4) mehrere versetzt angeordnete Öffnungen (7) zur Schaffung von Verstellmöglichkeiten für die Führung (3) und Zähne (11) für die Notverriegelung der Aufzugstür vorgesehen sind,
dadurch gekennzeichnet,
dass jede Öffnung (7) mit drei sich teilweise überschneidenden kreisrunden Ausnehmungen (10) versehen ist, deren Mittelpunkte (A;B;C) gleichschenklige Dreiecke (ABC) bilden.

2. Führungsleiste nach Anspruch 1,
dadurch gekennzeichnet,
dass der lotrechte Abstand vom Mittelpunkt (C) zu der durch die Mittelpunkte (A) und (B) begrenzten Strecke etwa halb so gross ist wie die durch die Mittelpunkte (A) und (B) begrenzte Strecke.

3. Führungsleiste nach den Ansprüchen 1 und 2,
dadurch gekennzeichnet,
dass die Mittelpunkte (A;B;C) der Ausnehmungen (10) der einen Öffnung (7) gegenüber den Mittelpunkten (A;B;C) der Ausnehmungen (10) der anderen Öffnung (7) in Querrichtung des Trägers (2) um jeweils eine Schrittweite (D) versetzt sind.

4. Führungsleiste nach Anspruch 3,
dadurch gekennzeichnet,
dass die Schrittweite (D) gleich einem Viertel der durch die Mittelpunkte (A) und (B) begrenzten Strecke ist.

5. Führungsleiste nach Anspruch 1,
dadurch gekennzeichnet,
dass als Führung eine Gleitführung (3) vorgesehen ist.

6. Führungsleiste nach Anspruch 1,
dadurch gekennzeichnet,
dass als Führung eine Rollenführung vorgesehen ist.

## Claims

1. Guide strip (1) for a lift door and consisting of a carrier (2) with a first limb (4) and a second limb (5) as well as of a guide (3), which is fastenable at the first limb (4), wherein several openings (7), which are arranged to be displaced one from the other, for the creation of possibilities of adjustment for the guide (3) and tooth (11) for the emergency locking of the lift door are provided at the first limb (4), characterised thereby, that each opening (7) is provided with three partially intersecting recesses (10) the centres (A; B; C) of which form isosceles triangles (A B C).

2. Guide strip according to claim 1, characterised thereby, that the perpendicular spacing from the centre (C) to the straight line joining the centres (A) and (B) is about half as great as the straight line joining the centres (A and (B).

3. Guide strip according to the claims 1 and 2, characterised thereby, that the centres (A; B; C) of the recesses (10) of the one opening (7) are each time displaced by one step width (D) in transverse direction of the carrier (2) relative to the centres (A; B; C) of the recesses (10) of the other opening (7).

4. Guide strip according to claim 3, characterised thereby, that the step width (D) is equal to one quarter of the straight line joining the centres (A) and (B).

5. Guide strip according to claim 1, characterised thereby, that a slide guide (3) is provided as guide.

6. Guide strip according to claim 1, characterised thereby, that a roller guide is provided as guide.

## Revendications

1. Barre de guidage (1) pour une porte d'ascenseur, formée d'un support (2) comprenant une première branche (4) et une seconde branche (5), et d'un guidage à glissement (3) apte à être fixé à la première branche (4), étant précisé qu'il est prévu, sur la première branche (4), plusieurs ouvertures (7) disposées en quinconce pour créer des possibilités de réglage pour le guidage (3), et des dents (11) pour le verrouillage de secours de la porte d'ascenseur, caractérisée en ce que chaque ouverture (7) est pourvue de trois cavités circulaires (10) qui se coupent en partie et dont les centres (A;B;C) forment des triangles isocèles (ABC).

2. Barre de guidage selon la revendication 1, caractérisée en ce que la distance perpendiculaire entre le centre (C) et le segment défini par les centres (A) et (B) est environ deux fois plus petite que le segment défini par les centres (A) et (B).

3. Barre de guidage selon les revendications 1 et 2, caractérisée en ce que les centres (A;B;C) des cavités (10) d'une ouverture (7) sont décalés suivant un pas (D) dans le sens transversal du support (2) par rapport aux centres (A;B;C) des cavités (10) de l'autre ouverture (7).

4. Barre de guidage selon la revendication 3, caractérisée en ce que le pas (D) est égal à un quart du segment défini par les centres (A) et (B).

5. Barre de guidage selon la revendication 1, caractérisée en ce qu'il est prévu, comme guidage, un guidage à glissement (3).

6. Barre de guidage selon la revendication 1, caractérisée en ce qu'il est prévu, comme guidage, un guidage à galets.
